# EUROPÄISCHE PATENTSCHRIFT

(11) **EP 1 232 829 B1**
(45) Veröffentlichungstag und Bekanntmachung des Hinweises auf die Patenterteilung: **08.03.2006**
(21) Anmeldenummer: 02000370.3
(22) Anmeldetag: 05.01.2002
(51) Int. Cl.: B23K 26/02

(54) **Vorrichtung zum Beschriften oder Markieren von Gegenständen mittels Laserstrahl**
Device for inscribing or marking of objects using laser beam
Dispositif pour mettre des inscriptions sur des objets ou pour les marquer au moyen de faisceau laser

(30) Priorität: 24.01.2001 DE 20101247 U
(43) Veröffentlichungstag der Anmeldung: 21.08.2002
(73) Patentinhaber: Sator Laser GmbH, 22525 Hamburg (DE)
(72) Erfinder: Sator, Alexander P., 22529 Hamburg (DE); Czarnetzki, Walter, Dr.Ing., 23847 Meddewade (DE); Krafzick, Helmut, 22045 Hamburg (DE)
(74) Vertreter: Schildberg, Peter

(56) Entgegenhaltungen:
- DE-A- 3 402 871
- DE-A- 10 034 166
- US-A- 5 919 853
- US-A- 6 064 032

## Beschreibung

Die Erfindung bezieht sich auf eine Vorrichtung zum Beschriften oder Markieren von Gegenständen mittels Laserstrahl nach dem Anspruch 1.

Das Markieren von Gegenständen, insbesondere von Verpackungsmaterialien mit Laserstrahlen ist seit längerem bekannt. Hierzu können scannende Systeme verwendet werden oder mit Masken arbeitende Systeme. Im ersteren Fall sind zwei drehbare Spiegel rechtwinklig zueinander angeordnet, so das der abgelenkte Laserstrahl jeden Punkt einer zweidimensionalen Fläche überstreichen kann. Bei dem Maskenverfahren wird ein Laserstrahl impulsartig durch eine Maske hindurchgeleitet zur Erzeugung der Beschriftung oder Markierung in einem Zuge.

Zur Erzielung höherer Leistungsdichten und daraus resultierender besserer Beschriftungsqualitäten ist bekannt, den Lichtstrahl auf die Werkstückoberfläche zu fokussieren. Hierzu werden sogenannte F-Theta-Optiken eingesetzt. Diese besitzen eine ebene Fokusfläche, so dass besonders an den Rändern der Beschriftungsebene die Abstandsänderung von der normalerweise kugelsymmetrischen Fokusfläche ausgeglichen wird.

Eine andere Möglichkeit, die Fokuslänge in Abhängigkeit vom Raumwinkel des abgelenkten Laserstrahls zu verändern, besteht darin, mechanisch die Brennweite des Linsensystems zu ändern. Hierzu müssen die Linsen mechanisch bewegt werden, was mit einem entsprechenden apparativen Aufwand verbunden ist.

Aus US 6,064,032 ist eine Vorrichtung zum Schneiden und Perforieren von Blättchen bekannt, die jeweils um einen Filterstopfen und das Ende einer Zigarette gewickelt werden, um diese zu einer Filterzigarette zu verbinden. Ein geleimter Streifen wird über eine Trommel an einer Schneide- und Perforationsvorrichtung vorbeigeführt, die die Blättchen ausschneidet und mit einer Perforationslinie versieht. Bei der Schneide- und Perforationseinrichtung wird ein kohärenter Lichtstrahl auf eine defraktive fokussierende Linse gerichtet, die den Lichtstrahl in Form von mehreren Lichtpunkten auf den zu perforierenden Streifen richtet. Indem der Streifen in einer Richtung gefördert wird und das Licht nur für kurze Zeitintervalle auf diesen gerichtet wird, entsteht in Förderrichtung ein Perforationsstreifen.

DE 3402871 A1 beschreibt ein Verfahren zum Beschriften von transparenten Bauelementen mit einem YAG-Laser. Hierzu wird das transparente Material mit einer Metallfolie beschichtet, die mit dem Laserstrahl beschossen wird. Das Folienmaterial wird durch die absorbierte Energie des Laserstrahls verdampft und führt zu einem lokalen Aufschmelzen der Oberfläche des zu beschriftenden Bauelements. Diese als lokale "Vernarbung" bezeichnete Oberfläche ermöglicht es, transparente Gegenstände gut lesbar zu beschriften, ohne eine Durchsicht zu stören.

Der Erfindung liegt die Aufgabe zugrunde, eine Vorrichtung zum Beschriften oder Markieren von Gegenständen zu schaffen, die eine zylindrische Oberfläche aufweisen können.

Diese Aufgabe wird erfindungsgemäß durch ein Linsensystem gelöst, bei dem die Fokusebene eine von dem Linsensystem weggekrümmte Fläche darstellt.

Das Linsensystem weist eine erste defokussierende und eine zweite fokussierende Linse auf. Nach der Erfindung weist die defokussierende Linse eine schwach konkave/ plane Linse auf und die zweite Linse eine plan/konvexe oder schwach konkav/konvexe Linse. Nach einer bevorzugten Ausgestaltung der Erfindung ist die zweite Linse vorzugsweise als Zylinderlinse ausgebildet. Bei dem Beschriften von zylindrischen Oberflächen ändert sich der Abstand zwischen Oberfläche und Linsensystem mit der Krümmung der Zylinderfläche. Senkrecht dazu bildet die Zylinderfläche jeweils in einer Richtung eine Gerade. Es versteht sich, dass das Linsensystem diesem Umstand Rechnung trägt.

Die Erfindung wird nachfolgend anhand einer Zeichnung näher erläutert.

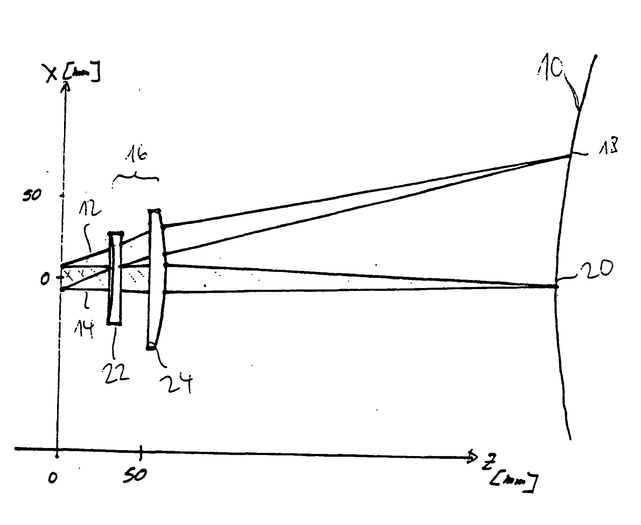

Die einzige Figur zeigt eine Linsenanordnung nach der Erfindung mit zwei Laserstrahlen zur Beschriftung oder Markierung einer zylindrischen Oberfläche.

Ein nicht näher dargestellter Gegenstand, beispielsweise eine Flasche, hat eine Oberfläche 10, deren Krümmung in der Zeichenebene liegt. Von einem Laser bzw. einem Ablenkspiegel sind zwei abgehende Laserstrahlen 12 bzw. 14 dargestellt. Die X-Achse kann zum Beispiel in der Fläche des Ablenkspiegels liegen. Der Laserstrahl 12 bzw. 14 hat eine gewisse Ausdehnung in der Breite. Er tritt durch ein Linsensystem 16 hindurch, das die Laserstrahlen 12, 14 auf der Oberfläche 10 fokussiert, wie bei 18 bzw. 20 dargestellt. Die Ablenkung der Laserstrahlen 12, 14 erfolgt jedoch nicht nur in der Zeichenebene, sondern auch senkrecht dazu. Eine derartige Ablenkung zum Beschriften oder Markieren mit Hilfe eines Ablenkspiegels ist jedoch allgemein bekannt.

Das Linsensystem 16 weist eine erste schwach konkav/plane Linse 22 auf und dahinter eine zweite plan/konvexe Linse 24, die im gezeigten Schnitt als Zylinderlinse, senkrecht dazu jedoch als normale konvexe Linse geformt ist. Der Brechungsindex der Linse 22 ist kleiner als der der Linse 24. Die erste Linse 22 hat eine defokussierende und die zweite eine fokussierende Wirkung. In jedem Fall ist die Anordnung der Linsen 22, 24 derart, dass unabhängig vom Raumwinkel der Laserstrahlen 12, 14 diese jeweils auf der Oberfläche 10 fokussiert werden.

Das in der obigen Beschreibung dargestellte Prinzip ist jedoch grundsätzlich auch auf sogenannte Maskensysteme anwendbar, bei denen im Strahlengang des Lasers eine spiegelbildlich ausgestanzte Maske das zu markierende Objekt formt. Schließlich ist auch möglich, sich auf einer zylindrischen Fläche bewegende Oberflächen zu beschriften. Hierbei wird beim Beschriften die Geschwindigkeit des bewegten Markierungsfeldes steuerungstechnisch am Scanner ausgeglichen.

## Patentansprüche

1. Vorrichtung zum Beschriften oder Markieren von Gegenständen mittels Laserstrahl, mit einem Laser zwecks Erzeugung eines Laserstrahls und einer Fokussieroptik zur Erzeugung einer höheren Strahlungsdichte auf der Oberfläche des Gegenstands, **dadurch gekennzeichnet, dass** ein Linsensystem (16) mit einer ersten defokussierenden und einer zweiten fokussierenden Linse (22, 24) vorgesehen ist, bei dem die Fokussierebene eine von dem Linsensystem (16) weggekrümmte Fläche (10) darstellt, wobei als erste Linse eine schwach konkave/plane Linse (22) und als zweite Linse eine plan/konvexe oder leicht konkav/konvexe Linse (24) vorgesehen ist.

2. Vorrichtung nach Anspruch 1, **dadurch gekennzeichnet, dass** die zweite Linse (24) als Zylinderlinse ausgebildet ist.

3. Vorrichtung nach einem der Ansprüche 1 oder 2, **dadurch gekennzeichnet, dass** der Brechungsindex der ersten Linse (22) kleiner ist als der der zweiten Linse (24).

## Claims

1. Device for inscribing or marking of objects using laser beam, comprising a laser to produce a laser beam and a focussing optical system to produce a larger radiation density on the surface of the object, **characterised in that** a lens system (16) is provided with a first defocussing lens and a second focussing lens (22, 24), in which the focussing plane constitutes an area (10) which is curved away from the lens system (16), a slightly concave/planar lens (22) being provided as a first lens and a planar/convex or slightly concave/convex lens (24) being provided as a second lens.

2. Device according to claim 1, **characterised in that** the second lens (24) is formed as a cylindrical lens.

3. Device according to either claim 1 or 2, **characterised in that** the refractive index of the first lens (22) is smaller than that of the second lens (24).

## Revendications

1. Dispositif pour mettre des inscriptions sur des objets ou pour les marquer au moyen de faisceau laser, avec un laser en vue de générer un faisceau laser, et un système optique de focalisation pour générer une plus forte luminance énergétique sur la surface de l'objet, **caractérisé en ce qu'**un système de lentilles (16) avec une première lentille défocalisante et une seconde lentille focalisante (22, 24) est prévu, dans lequel le plan de focalisation représente une surface (10) courbée dans le sens opposé par rapport au système de lentilles (16), une lentille (22) légèrement concave/plane étant prévue comme première lentille et une lentille (24) plane/convexe ou légèrement concave/convexe étant prévue comme seconde lentille.

2. Dispositif selon la revendication 1, **caractérisé en ce que** la seconde lentille (24) est réalisée comme lentille cylindrique.

3. Dispositif selon l'une des revendications 1 ou 2, **caractérisé en ce que** l'indice de réfraction de la première lentille (22) est plus faible que celui de la seconde lentille (24).
